Europäisches Patentamt

(19) European Patent Office

Office européen des brevets

(11) Publication number: **0 366 379**

**A2**

(12) **EUROPEAN PATENT APPLICATION**

(21) Application number: **89310870.4**

(22) Date of filing: **23.10.89**

(30) Priority: **24.10.88 US 260540**

(43) Date of publication of application:
**02.05.90 Bulletin 90/18**

(84) Designated Contracting States:
**DE FR GB IT NL**

(51) Int. Cl.⁵: **D01F 8/14 , D01F 8/06**

(71) Applicant: **E.I. DU PONT DE NEMOURS AND COMPANY**
**1007 Market Street**
**Wilmington Delaware 19898(US)**

(72) Inventor: **Ahn, John Seungun**
**1503 Sutton Drive**
**Kinston North Carolina 28501(US)**
Inventor: **Kwok, Wo Kong**
**11 McCormick Drive**
**Hockessin Delaware 19707(US)**
Inventor: **Molter, John Ormond**
**2411 Lanside Drive**
**Wilmington Delaware 19810(US)**
Inventor: **Tanny, Stephen Robert**
**111 Horseshoe Road**
**Newark Delaware 19711(US)**

(74) Representative: **Jones, Alan John et al**
**CARPMAELS & RANSFORD 43 Bloomsbury Square**
**London, WC1A 2RA(GB)**

(54) **Bicomponent binder fibers.**

㊸ Sheath/core binder fibers have a polyester fiber core and a sheath of ethylene/vinyl acetate copolymer or other organic copolymer of ethylene with polar comonomer, especially acrylate(s), such binder fibers having good processability and potential adhesion to surfaces of other polymers, especially to other fibers, such as of polyester, nylon and/or polypropylene, and blends thereof, and bonded products and processes relating thereto.

EP 0 366 379 A2

EP 0 366 379 A2

# BICOMPONENT BINDER FIBERS

## FIELD OF THE INVENTION

The invention concerns improvements in and relating to bicomponent binder fibers that are polyester-based, and more particularly to such fibers that are sheath/core, i.e. that consist essentially of a central polyester fiber core of higher melting point, and of an outer sheath (preferably concentric) that consists essentially of wholly organic polymer of lower melting point and that acts as binder component for adhesion to other surfaces, especially to other fibers, and that are new in that the outer sheath is a copolymer of ethylene and a wholly organic polar comonomer, such as vinyl acetate and acrylic comonomers, such that the copolymer provides good adhesion to the polyester core and good bondability to the other surfaces, and to blends of the new binder fibers with other fibers, and to non-woven materials, e.g. webs, of such fiber blends and to the resulting bonded materials, and to processes for preparing and using such like, and the products resulting from these processes.

## BACKGROUND ART

Binder fibers have long been suggested in the art and have been used commercially in increasing amounts, because the resulting bonded products have shown advantages in several applications over bonded products obtained by other bonding means, especially resin binding agents that have been sprayed onto fibrous webs alone, i.e. without using such binder fibers. The present invention concerns improvements in and relating to such binder fibers, and more particularly to bicomponent binder fibers.

In recent years, bicomponent binder fibers have been produced (particularly in Japan) and used commercially in large quantities, because these bicomponent binder fibers with a higher melting central core and a lower melting concentric sheath have shown advantages over monocomponent binder fibers in particular applications. Such fibers are often intended for blending with polyester fibers, sometimes referred to as PET. So large quantities of polyester-based binder fibers have been produced and used, e.g. sheath/core wholly polyester fibers with a homopolymer (polyethylene terephthalate, often referred to as 2G-T) central core that is of higher melting point (m.p.) than the surrounding lower melting concentric sheath (of copolyester or otherwise modified 2G-T). Commercial examples of such fibers are believed to be made by Nippon Ester, and sold by Unitika and Kanebo under tradenames such as "MELTY" and "BELL-COMBI", and made and sold by Kuraray under the tradename "SOFIT" and made and sold by Toyobo under the tradename "ESURANAL". Wholly polyester binder fibers have proved effective for bonding other polyester fibers, e.g. when used in wholly polyester blends. When, however, it is desired to blend and use a binder fiber with materials other than polyester, e.g. with nylon or polypropylene (PP) fibers, such wholly polyester binder fibers have not given good bonding, so it would have been desirable to use a binder fiber having broader application in the sense of giving better adhesion to these other materials, especially to nylon and PP fibers.

An even earlier commercial product was and still is made and sold by Chisso under the tradename "ES Fiber", being a concentric sheath-core bicomponent fiber wholly of polyolefin, i.e. without a polyester core. Similar polyolefin-type materials have been made and sold by Daiwa (under the tradename "NBF") and by Ube Nitto KK. It will, however, be recognized that, for making articles such as fabrics by blending binder fibers with polyester fibers, there has often been a decided advantage in using a core such as polyester for the binder fiber, as such polyester core remains in the form of a polyester fiber after the bonding treatment, and this often has an advantage for this purpose, in contrast with polyolefin cores, which are lower melting and, after the bonding treatment, are very different from the polyester fibers. The present invention is concerned with (improving) binder fibers that have cores of higher melting polyester, rather than of polyolefin.

In addition to the wholly polyester bicomponent binder fibers mentioned above, Nippon Ester/Kanebo/Unitika and Kuraray (and possibly others, such as Chisso) are believed to have made and sold polyethylene (homopolymer) sheath/polyester (2G-T) core bicomponents for various uses, including wet-laid and dry-laid non-woven fabrics and spun-bonded fabrics and so has Enka. As will be indicated hereinafter, the present invention provides improved results in comparison with these prior commercial bicomponents having polyester as the core, with a polyolefin as the sheath.

2

The sheath/core binder fibers that are mentioned above are believed to have been actually manufactured and used in practice, and there may have been others. Each can show different advantages for some situations, but there has not been a binder fiber that has provided the performance available from wholly polyester binder fibers in polyester blends, when the binder fiber has been blended with such other fibers as nylon and PP. Sometimes, it may be desirable to blend binder fibers with mixtures including such other fibers.

There has been extensive literature on binder fibers, including the use of bicomponents. This literature has had varying levels of authority and impact on those skilled in the art. Manufacturers and sales representatives have distributed brochures describing the properties and suggesting advantages for the preferred fibers that have been considered worthy enough to merit commercial production, such as have been mentioned previously. Patent literature has also suggested other binder fibers. It is in the nature of patent disclosures that they are suggestions, and often broad in nature, embracing not only the specific materials that are preferred and considered economically viable, but also seemingly less attractive and less preferable modifications of the then preferred embodiments. Representative patent disclosures are listed herein.

GB 1,149,270 (ICI, Clarke, 1969) described bonded non-woven materials, and recommended use of a symmetric sheath/core configuration for the mechanically crimped composite filaments to be used to effect bonding. Various compositions were suggested, including potentially adhesive (i.e. binder) sheaths of polypropylene and of polyethylene on a poly(ethylene terephthalate) core.

Pamm, U.S. Patent No. 4,281,042, described polyester fiberfill blends, an essential element of which were binder fibers, including conjugate or bicomponent binder fibers, as suggested in Stanistreet, U.S. Patent No. 4,068,036, and mentions several earlier disclosures on the use of bonding and other aspects related to polyester fiberfill. Preferred binder compositions and fibers were then wholly of polyester for this end-use.

Similarly, Scott, U.S. Patent No. 4,418,116, described wholly polyester binder fibers.

Tomioka et al., U.S. Patent No. 4,500,384, describes a process for producing a non-woven fabric of hot-melt-adhered composite fibers. This process involves (A) forming a web of fiber aggregate consisting of sheath/core composite fibers alone or mixed with other fibers, (B) imparting crimps to the sheath/core fiber, and (C) subjecting the web to heat treatment, various requirements being specified more particularly. The process is said to satisfy requirements (of providing a high strength in as small a weight of fabric as possible and as soft a feeling as possible) that were impossible to satisfy by known processes. The importance is emphasized of a difference of $30^\circ$C or more between the melting points of the two components of the sheath/core composite, of the average thickness of the sheath being limited to 1.0 to 4.0 microns, and to the heat treatment conditions. Tomioka uses two specific sheath/core combinations. Example 2 uses polyethylene terephthalate (IV 0.65) in the core with a sheath of high density polyethylene (melt index 23); Tomioka claims this combination in Claims 4 and 5. Tomioka's only other combination is not polyester-based, but has polypropylene in the core (melt flow rate 15), with a sheath of ethyl-vinyl acetate (melt index 20), in Example 1 and Claims 2 and 3. His "other fibers" include natural fibers, semisynthetic fibers, synthetic fibers and inorganic fibers, with several examples of such fibers, and his Example 3 uses a mixture of 20% of the polypropylene-based sheath/core fiber of Example 1 with 80% of polyester fibers.

Tomioka references are mentioned in the Background portions of Harris et al., U.S. Patent Nos. 4,552,603 and 4,732,809, in relation to ES Fiber, and literature relating thereto, being a highly eccentric sheath/core arrangement of polyethylene and polypropylene. Harris discloses a bicomponent fiber, and method for making such fiber, and non-wovens made therefrom, with polyester core and in each case polyethylene or polypropylene as sheath, while assuming that other polymers having m.p. at least about $15^\circ$C below that of polyester would serve equally well (as sheath).

Japanese Patent Application Disclosure Tokukai 63-66 274 (1988), published March 24, 1988, entitled hot melt binder fiber, has tried to overcome some disadvantages of prior sheath/core binder fiber combinations for use with polyester fiber as "base fiber", so suggests a polyester core with a sheath of ionomer resin, i.e. copolymers using unsaturated carboxylic acids in the form of a metal salt, preferably a copolymer of ethylene and methacrylic acid cross-linked by sodium ions and with a melt flow rate of 5-10.

The object of the present invention is to provide improvements as aforesaid, especially for bonded fabrics and other bonded products such as are obtainable by heat treatment of blends of polyester-based binder fibers.


## SUMMARY OF THE INVENTION

The present invention provides a new and advantageous polyester-based binder fiber, being a wholly organic combination that is new, i.e. different from the specific combinations of polyolefin outer sheaths with polyester fiber cores that have been used previously. This new combination provides better adhesion between the polyester core and an olefin polymer sheath, than is provided by previous combinations with polyolefins. We believe this improved sheath/core adhesion to be very important in relation to the strength of downstream bonded products, as well as the potential bondability to other surfaces in such bonded products.

The present invention accordingly provides an improved sheath/core binder fiber having a lower melting sheath of olefin polymer and a core of higher melting polyester, the improvement being characterized by the sheath consisting essentially of an organic copolymer of ethylene with polar comonomer, such polar comonomer preferably comprising vinyl acetate and/or one or more acrylic comonomers.

The new binder fibers make it possible to produce bonded webs that are softer, more resilient and more strongly bonded as compared with prior webs obtained by bonding with binder fibers having sheaths of polyethylene homopolymer, referred to herein as PE.

Also provided, therefore, according to the present invention, are blends of the new binder fibers with other fibers, that are higher melting than the binder component and so may be bonded thereby, and the resulting products, such as webs, batts and molded or other shaped articles, and processes for their preparation and bonding, and the resulting bonded products, including fabrics and other bonded materials and shaped articles.

## DETAILED DESCRIPTION OF THE INVENTION

The essence of the present invention is the new combination, with a core of polyester (PET), and with a sheath of an olefin polymer that is, for shorthand convenience, herein referred to as an organic copolymer of ethylene with a polar comonomer. A preferred group of such copolymers are copolymers of ethylene with vinyl acetate, or vinyl propionate, if desired with other comonomers, such as have been available commercially for several years from E. I. du Pont de Nemours and Company. These materials may be prepared directly, or by melt blending, as described hereinafter, suitable materials and their preparation being mentioned in the working Examples. The presence of metallic ions is not desired, i.e. ionomer resins are not included within the scope of the invention, as indicated by the requirement that the copolymer be organic; i.e. wholly organic comonomers are suitable. Additional preferred polar comonomers are acrylic comonomers, including the acrylates, such as methylacrylate, ethylacrylate and the butylacrylates, and the methacrylates, such as methyl methacrylate and ethyl methacrylate, and carboxylic acids, such as acrylic acid and methacrylic acid, itaconic acid, fumaric acid, maleic acid, and their anhydrides, mono- and di-esters, amides imides, etc., and epoxies, such as glycidyl acrylate or methacrylate. Combinations of comonomers may be used, as indicated in the art, for instance terpolymers, e.g. terpolymers of ethylene with more than one polar comonomer, or with a polar comonomer and another comonomer, that is not necessarily polar, e.g. olefins, such as propylene, butenes, pentenes, hexenes, and higher olefins, including octenes, whether branched or linear. Suitable polar comonomers include also sulfur dioxide and carbon monoxide. Such comonomers as maleic anhydride may be incorporated by direct synthesis or polymers may be grafted with maleic anhydride, as described, e.g., in Tanny et al., U.S. Patent No. 4,230,830, which also describes various polar comonomers and copolymers incorporating them. Thus, the organic copolymers used for the sheaths may be prepared by direct copolymerization, by any known process, as well as by grafting suitable monomers onto suitable substrates, i.e. such as are amenable to grafting and provide graft copolymers that can provide good bondability to polyester. Examples of suitable substrates are homo and copolymers of ethylene and, as well, higher α-olefins such as propylene, butene , etc. Suitable binder materials for the sheaths also include blends of one or more of the above, and blends with other olefin polymers, e.g. polyethylene (PE) or polypropylene (PP), or blends with appropriate rubbers, such as EPDM and EPDM grafted with maleic anhydride, including polymers sold by E.I. du Pont de Nemours and Company.

Summarizing, these organic copolymers of ethylene with a polar comonomer include:

A. binary copolymers of ethylene with a polar comonomer;

B. ter- and multi-polymers of ethylene and one or more polar comonomers;

C. ter- and multi-polymers of ethylene, α-olefins and polar comonomers. Such α-olefins would include propylene, butenes, pentenes, hexenes and octenes, branched and linear;

D. polymers prepared by direct copolymerization, by any known process, as well as by grafting polar monomers onto suitable substrates;

E. Blends of the above.

References to such copolymers of ethylene herein include any or all of the items in A through E. Blends of materials A through D can be created by blending with other resins, not being such copolymers of ethylene with a polar comonomer. These other resins would include, but not be limited to:

A. Polyethylenes - homopolymers produced by any known process with a density range of 0.89 to 0.97 and melt index ranges (measured at 190°C, 2.16 kg) from 0.1 to 100.

B. Other polyolefins, i.e. homopolymers of higher α-olefins such as polypropylene, polybutene, polymethylpentene, etc.

C. Copolymers (including terpolymers) of ethylene and other α-olefins such as propylene, butene, hexadiene, etc., in all comonomer ranges;

D. Copolymers (including terpolymers) of propylene and butene with other α-olefins, in all comonomer ranges.

The key here is that blends of these resins with such copolymers of ethylene should be in a range such that good adhesion to the polyester core is obtained. Actual compositional ranges will depend upon the polymers being blended together.

Examples of preferred (polar) copolymers of ethylene have been commercially available for several years from E. I. du Pont de Nemours and Company and sold under the tradenames "Elvax", "Bynel", "Nucrel" and "Vamac".

Thus, for example, suitable blends that have been commercially available include blends of ethylene/vinyl acetate polymers with ethylene/methacrylic acid copolymers, or blends of ethylene/vinyl acetate copolymers with ethylene/isobutyl acrylate/methacrylic acid terpolymers, if desired also with polypropylene, and blends of ethylene/methacrylic acid copolymer with ethylene/isobutyl acrylate/methacrylic acid terpolymers. Preferred amounts, by weight, of ethylene are generally 60-95%, with the balance of 40-5% being the comonomer, the preferred comonomers, vinyl acetate and acrylics, preferably being 15-32% of the copolymer of ethylene, and equivalent amounts of other polar comonomers may be used. For example, copolymers of ethylene and vinyl acetate, with vinyl acetate ranging from 5% to 40% provide better adhesion to polyester than polyethylene and are suitable within the scope of this invention. However, a preferred range of vinyl acetate would include copolymers with 15% to 32% vinyl acetate. If terpolymers of ethylene, vinyl acetate and a third comonomer are employed, or if blends of ethylene vinyl acetate copolymers with another polymer are employed, the preferred range of vinyl acetate may or may not fall within the 15% to 32% range. For example, certain polar monomers, which provide high levels of adhesion to polyester, such as maleic anhydride or glycidyl methacrylate, can be copolymerized with ethylene, either directly or by a grafting process and used directly. As an alternative, these comonomers can be polymerized with ethylene and vinyl acetate, either directly or by a grafting process, and used as such. Because of the importance of enhanced bondability to polyester, the preferred range of vinyl acetate will not necessarily be 15% to 32% but may be less depending upon the type of third monomer employed and its level of employment.

If acrylate or methacrylate esters are substituted for vinyl acetate, preferred levels of comonomer will also be in the 15% to 32% range, although compositions outside of this range may, like vinyl acetate, be suitable. Because of their inherent improved thermal stability as compared to vinyl acetate systems, (meth)-acrylate systems will be of advantage in the manufacture of the binder fibers, particularly if coextrusion is desired with polyesters at temperatures at which vinyl acetate copolymers will begin to degrade. Representative formulations are provided hereinafter in relation to the working Examples. The amounts of these preferred comonomers should be sufficient to achieve the desired effect, increasing amounts of vinyl acetate, for example, generally providing better adhesion to the polyester core, and lowering the melting point, and providing softer bonded products. As the melting point drops, however, this may cause processing or preparation problems, e.g. in spinning the bicomponent.

The preparation of the sheath/core binder fibers according to the invention may be performed by methods essentially analogous to those used for PE/PET sheath/core binder fibers according to the prior art, substituting the copolymer of ethylene with polar comonomer for the prior art PE (homopolymer) sheath, and described hereinafter in the working Examples. Such techniques are described in the prior art specifically mentioned above, which are herein specifically incorporated by reference. The proportions of the sheath and core and the denier per filament (dpf) for any specific end-use will generally depend on the specific desiderata for that end use and on the component(s) selected. Using the preferred materials indicated in the Examples hereinafter, the sheath/core ratio has been varied from 50/50 by weight to 10/90, and from 2 to 10 dpf. It is generally preferred to use a core of comparable dpf to the fibers that will be blended therewith, it being understood, however, that it is easier to process, e.g. by carding, binder fibers of total dpf that is comparable with that of other fibers in the blend, unless specific provisions are made therefor. Similarly, for ease of processing, it is generally preferred that the fibers be crimped mechanically. The configuration, especially the mating surfaces, of the components will depend on similar desiderata and economy of manufacture.

The invention is further illustrated in the following Examples, in which all parts, percentages and ratios are by weight unless otherwise indicated.

Copolymer A is a melt blend that consists of three copolymer components in amounts 40/40/20, namely 40% of a copolymer of 72% ethylene and 28% vinyl acetate, having a melt index of 6, 40% of a copolymer of 82% ethylene and 18% vinyl acetate, having a melt index of 0.7, and 20% of a terpolymer of 80% ethylene, 10% isobutyl acrylate and 10% methacrylic acid, having a melt index of 10, i.e. an overall content of 77.6% ethylene, 18.4% vinyl acetate, 2% isobutyl acrylate and 2% methacrylic acid.

Copolymer B is another melt blend, with an overall content of 73.6% ethylene and 22.4% vinyl acetate, with 2% of each of isobutyl acrylate and methacrylic acid, being an 80/20 blend of a copolymer of 72% ethylene and 28% vinyl acetate, having a melt index of 6, and a terpolymer of 80% ethylene, 10% isobutyl acrylate and 10% methacrylic acid, having a melt index of 35.

The homopolymer PET was of relative viscosity 21.5, measured as described in U.S. Patent No. 3,772,872. For practice of the present invention, the core is preferably prepared from such PET of relative viscosity at least about 18.

The scope of this invention is not meant to be limited by the viscosity characteristics of the copolymers chosen for the outer sheath. The viscosity characteristics should be such that the polymers are melt-extrudable and compatible with fiber-manufacturing processes. It is advantageous to choose the viscosity of the outer sheath system so that it is a reasonable match for the viscosity of the polyester under the temperature and shear conditions of the extrusion process.

## EXAMPLE 1

Copolymer A and homopolymer PET were melted separately and extruded, at 255% and 295°C, respectively, into and through a sheath-core spinneret assembly (of the type shown in FIGS. 1-14 of Kilian U.S. 2,936,482), and so spun as a concentric bicomponent fiber, using block temperatures of 235°C and 295°C, respectively for the sheath (Copolymer A) and the core (homopolymer PET). The PET melt was extruded from each capillary of the top plate through the centerline of the counterbore of each spinneret plateau and the Copolymer A was metered through the space between each plateau of the spinneret and the top plate into the spinneret's counterbore, thus forming a sheath-core filament, with a 50/50 polymer ratio. Centerline of each capillary in the top plate transporting PET was precisely aligned with that of the counterbore of each plateau in the spinneret, to produce a concentric sheath/core binder fiber cross-section. The filaments were quenched by air at 21°C, collected into a bundle at a speed of 710 yards per minute, and finish was applied. Filaments from several bundles were combined to produce a filamentary tow having a total denier of about 51,000. The tow was drawn 3.2X at 60°C, crimped in a stuffing box type of crimper, and relaxed (no restraint) in an oven for 12 minutes at 60°C. The final S/C product had 5.5 dpf, 2.9 grams/denier tenacity, 23.3% elongation and 7.0 crimps per inch, and readily bonded to PET fibers as may be seen from the following tests.

The sheath/core binder fiber was blended with an equal weight of 5.5 dpf PET fibers, and carded by using a Rotor-Ring machine. The samples were rolled and bonded at various temperatures in an oven and the bonded batt samples were tested on an Instron machine to measure break strength and % elongation, as shown in Table 1A. These values are adequate for commercial purposes, being of similar order of magnitude to (but generally less than) those obtained from a commercial copolyester binder fiber (based on ethylene terephthalate/isophthalate copolymer sheath with a PET core).

6

TABLE 1A

| OVEN TEMP | BREAK STRENGTH | ELONG |
|---|---|---|
| (°C) | (IN LBS.) | (%) |
| 100 | 8.19 | 32.29 |
| 125 | 12.04 | 30.30 |
| 150 | 19.09 | 30.89 |
| 175 | 19.71 | 31.00 |

Similar sheath/core binder fibers according to the invention were compared with a commercial 3 dpf PE/PET, i.e, polyethylene/polyester, sheath/core binder, when blended in the indicated amounts with similar PET fibers, as mentioned above, but 1.5 dpf, and the maximum tensile strengths of the resulting calender point bonded fabrics are compared in Table 1B, from which it can be seen that the fabrics of the invention provide much better (bonding) strength, i.e. the sheath/core fibers of the invention provide better bonding in these fabrics, even at lower binder fiber contents, enabling more flexibility to be used in making bonded products.

## TABLE 1B

| PROPORTIONS | TENSILE STRENGTHS (gm/in) | | | |
|---|---|---|---|---|
| FIBER BLEND | INVENTION | | PE/PET | |
| BINDER/PET | MD | CD | MD | CD |
| 50/50 | 769 | 45 | 450 | 45 |
| 35/65 | ------- | | 380 | 36 |
| 25/75 | 490 | 44 | ------ | |

As conventional, MD indicates strength in machine direction, whereas CD indicates strength in the cross (i.e. other) direction.

Similarly, the sheath/core fibers of the invention are blended 50/50 with polypropylene (PP) fibers and the tensile strengths of the resulting bonded fabrics are compared in Table 1C with the same PE/PET binder fiber that is commercially available, and the advantage of the binder fibers of the invention is again apparent, in the machine direction:

TABLE 1C

| | INVENTION | | PE/PET | |
|---|---|---|---|---|
| | (with 1.8 dpf PP) | | (with 1.8 dpf PP) | |
| | MD | CD | MD | CD |
| Tensile (gm/in) | 1633 | 179 | 1100 | 174 |

In Table 1D, the fabric tensile strengths are given for the indicated blends of the sheath/core binder fibers of the invention when bonded with heated air (Through-air), indicating this versatility.

7

EP 0 366 379 A2

## TABLE 1D

| | TENSILE STRENGTH (gm/in) | | | | | |
|---|---|---|---|---|---|---|
| | 1.5 dpf PET | | 1.8 dpf PP | | 3 dpf NYLON | |
| BLENDS | MD | CD | MD | CD | MD | CD |
| 50/50 | 800 | 45 | 800 | 43 | 750 | 70 |
| 25/75 | 290 | 11 | 180 | 57 | 130 | 33 |

## EXAMPLE 2

Copolymer B and homopolymer PET were melted separately and extruded through a sheath-core spinneret assembly, and processed, using conditions essentially similar to those of Example 1.

The final binder fiber also readily bonded to PET fibers, and had 4.9 dpf, 4.1 grams/denier tenacity, 23.2% elongation and 7.0 crimps per inch, and gave excellent bonded products.

A particular advantage of the preferred binder fibers of this invention is that they may be used to bond various other materials in fiber form, as demonstrated above, and also materials that are in different forms, i.e. not only fibers, e.g. films that are used in diapers or sanitary napkins, if this is desired.

The superiority of the adhesion potential of the sheath polymer (of the binder fibers of the invention) over a commercial homopolymer PE may be demonstrated by measuring peel strengths of films of such polymers (contrasting the superior strength, i.e. adhesion, of the sheath polymer over the PE) when thermally laminated to standard non-woven fabrics of either PET fibers or PP fibers, as shown hereinafter in Table 2.

## TABLE 2

| | | Peel Strengths | | | |
|---|---|---|---|---|---|
| Bond Temp (°C) | | 1.75 dpf PET Fiber | | 1.8 dpf PP Fiber | |
| Top Plate | Bottom Plate | Sheath Polymer | PE* | Sheath Polymer | PE* |
| 149 | 64-68 | 232 | 58 | 385 | 5 |
| 171 | 73-82 | 297 | 119 | 290 | 115 |
| 177 | 68-70 | 393 | 152 | 362 | 39 |
| 182 | 60-66 | 365 | 204 | 493 | 36 |
| 188 | 72-84 | 368 | 323 | 250 | 189 |

*Polyethylene sheet from diaper (that is commercially-available)

As indicated, we believe that superior adhesion of the sheath polymer to the material of the core, and to the other materials to be bonded, is extremely important, when using the binder fibers of the invention in practice.

## Claims

1. An improved sheath/core binder fiber having a lower melting sheath of olefin polymer and a core of higher melting polyester, the improvement being characterized by the sheath consisting essentially of an organic copolymer of ethylene with polar comonomer.

2. A binder fiber according to Claim 1, wherein the sheath consists essentially of a copolymer of ethylene and vinyl acetate, if desired with a further comonomer.

8

3. A binder fiber according to Claim 1, wherein the sheath consists essentially of a copolymer of ethylene and one or more acrylic comonomers.

4. A blend of polyester fibers with binder fibers according to Claim 1, 2 or 3.

5. A blend of nylon fibers with binder fibers according to Claim 1, 2 or 3.

6. A blend of polypropylene fibers with binder fibers according to Claim 1, 2 or 3.

7. A process for preparing a bonded article from a blend of polyester fibers with a binder fiber according to Claim 1, 2 or 3, wherein the blend is processed to form a shaped article, and the shaped article is heat-treated to effect bonding of the binder fiber to the polyester fiber, so as to provide a bonded shaped article.

8. A process for preparing a bonded article from a blend of nylon fibers with a binder fiber according to Claim 1, 2 or 3, wherein the blend is processed to form a shaped article, and the shaped article is heat-treated to effect bonding of the binder fiber to the nylon fiber, so as to provide a bonded shaped article.

9. A process for preparing a bonded article from a blend of polypropylene fibers with a binder fiber according to Claim 1, 2 or 3 wherein the blend is processed to form a shaped article, and the shaped article is heat-treated to effect bonding of the binder fiber to the polypropylene fiber, so as to provide a bonded shaped article.